# EUROPÄISCHE PATENTANMELDUNG

(11) **EP 1 182 073 A2**
(43) Veröffentlichungstag der Anmeldung: **27.02.2002**
(21) Anmeldenummer: 01119501.3
(22) Anmeldetag: 14.08.2001
(51) Int. Cl.: B60J 7/22

(54) **Cabriolet**

(30) Priorität: 16.08.2000 DE 10039791
(71) Anmelder: DaimlerChrysler AG, 70567 Stuttgart (DE)
(72) Erfinder: Currle, Joachim, Dr., 70327 Stuttgart (DE); Frühauf, Frank, Dr., 73773 Aichwald (DE); Mössner, Alexander, 71229 Leonberg (DE)

(57) **Zusammenfassung**

Vorliegend wird ein Cabriolet (1) beschrieben, bei dem wenigstens einem Fahrzeugsitz ein Windschott (3) zugeordnet ist. Dabei ist das wenigstens eine Windschott (3) in Form und Lage an sich auf den Fahrzeugsitzen (2a,2b) befindende Insassen (4a,4b) angepaßt, wobei zumindest in einem Teil des das Windschott (3) begrenzenden Bereichs (5a,5b) eine aerodynamische Luftleitvorrichtung vorgesehen ist.

## Beschreibung

Die vorliegende Erfindung bezieht sich auf ein Cabriolet nach dem Oberbegriff des Patentanspruches 1.

Bei aus der Praxis bekannten Cabriolets ist in dem hinteren Fahrgastraum in Höhe der Fahrzeuggürtellinie eine plattenförmige Abdeckung eingesetzt, von deren vorderen Rand ein sich über die ganze Fahrzeugbreite erstreckendes und sich seitlich am Überrollbügel abstützendes Windschott etwa lotrecht nach oben absteht. Durch ein solches Windschott sollen die Insassen und dabei insbesondere Kopf, Nacken und Schulter der Insassen gegen von hinten einströmende störende Fahrtwindwirbel geschützt werden. Ein solches Windschott ist beispielsweise aus der DE 37 38 500 A1 bekannt. Durch ein Windschott entsteht andererseits in der Kabine ein noch höherer Unterdruck, wodurch sich die hinter dem vorderen Dachquerträger ausgebildete Strömungsscherschicht nach unten in Richtung Kabine verlagert und eine erhöhte Luftzuggefahr durch den Fahrtwind von vorne darstellt.

In der DE 198 10 865 A1 wird ein Cabriolet mit einem hinter einer Sitzreihe angeordneten, sich über diese hinaus nach oben erstreckenden, vorzugsweise über die gesamte Innenraumbreite verlaufenden Windschott offenbart, wobei zusätzlich Maßnahmen zur Zuführung von Luft aus dem Bereich hinter dem Windschott in den Fahrgastraum vorgesehen sind. Dafür soll zumindest der obere Teil des Windschotts etwa ab Schulterhöhe bis über Kopfhöhe der Fahrzeuginsassen aus einem transparenten Material, vorzugsweise einer Glasscheibe, ausgebildet sein. Als Maßnahme zur Zuführung von Luft aus dem heckseitigen Bereich des Windschotts in den Fahrgastraum ist mindestens ein Luftkanal vorgesehen, der von einem Bereich hinter dem Windschott ausgeht und in Bereiche des Fahrgastraumes mündet, in denen die zurückgeführte Luft vom Fahrzeuginsassen nicht als Belästigung empfunden wird.

Mit solchen - zumindest im oberen Bereich - transparenten Windschott kann vorteilhafterweise eine unbehinderte Sicht der Fahrzeuginsassen erreicht werden, insbesondere des Fahrers nach hinten. Zugleich trägt ein in dieser Offenlegungsschrift beschriebener Luftkanal dafür Sorge, daß sich auf der Rückseite des Windschotts stauende Luft kontrolliert in den Fahrgastraum zurückgeführt wird, und dadurch der Unterdruck in der Fahrzeugkabine ausgeglichen wird. Jedoch ist die in dieser Druckschrift beschriebene Anordnung der Luftdurchtritte relativ kompliziert und erfordert einen relativ hohen baulichen Aufwand, der zu hohen Kosten führt.

Ausgehend von diesen aus dem Stand der Technik bekannten Cabriolets ist es nun Aufgabe der vorliegenden Erfindung, bei einem Cabriolet ein Windschott derart bereitzustellen, daß der Unterdruck in der Fahrzeugkabine ausgeglichen wird, ohne daß die Insassen mit Zugluft belastet werden.

Gemäß der vorliegenden Erfindung wird die Aufgabe bei einem Cabriolet der eingangs bezeichneten Art durch die aus dem Patentanspruch 1 entnehmbaren Merkmale gelöst.

Bei einem solchen Cabriolet wird nun wenigstens einem Fahrzeugsitz ein Windschott zugeordnet, wobei dieses wenigstens eine Windschott an sich auf den Fahrzeugsitzen befindende Insassen angepaßt ist, und wobei zumindest auf einer Seite am Windschott eine aerodynamische Luftleitvorrichtung vorgesehen ist. Damit ist gemeint, daß sich die Luftleitvorrichtung an jedem Teil des das Windschott begrenzenden Bereichs befinden kann. Sie kann also in Fahrtrichtung gesehen links, rechts oder oben an dem Windschott angebracht sein.

Wenn das Windschott an sich auf den Fahrzeugsitzen befindende Insassen angepaßt sein soll, ist darunter zu verstehen, daß die Form und die Lage des Windschotts im wesentlichen auf eine allgemein gültige Körperform angepaßt ist, und nicht jeweils auf einen bestimmten Insassen angepaßt werden muß. Mit "angepaßt" soll hier ausgedrückt werden, daß die Form und die Lage allgemein einem Insassen zugeordnet ist und sich nicht über die gesamte Fahrzeugbreite ersteckt.

Bei der erfindungsgemäß beschriebenen, an die Insassen angepaßten Windschottform werden einerseits die Insassen vor der von hinten einströmenden Luft geschützt, andererseits wird zum Zweck des Druckausgleichs in der Kabine der rückströmenden Luft ausreichend Raum gegeben. Aerodynamische Leitelemente unterstützen diese Luftrückführung in vorteilhafter Weise, so daß die Insassen keine störenden Zugerscheinungen verspüren.

Die Windschottform kann an die Insassen in vorteilhafter Weise derart angepaßt sein, daß zum Druckausgleich beispielsweise in der Fahrzeugmitte zwischen den Insassen Luft von hinten in die Fahrzeugkabine geführt wird, so daß aufgrund des Luftmassentransports ein Druckausgleich in der Fahrzeugkabine gewährleistet ist.

Dabei kann die Reduktion des beim offenen Fahren entstehenden Unterdrucks in der Kabine durch gezielte Luftmengenzufuhr in für die Insassen unproblematische Bereiche, wie beispielsweise der Fahrzeugmitte, und damit auch ein nach oben Verlagern der Strömungsscherschicht erreicht werden.

Indem zumindest auf einer dem benachbarten Fahrzeugsitz zugewandten Seite am Windschott eine aerodynamische Luftleitvorrichtung vorgesehen ist, kann eine Düsenwirkung zwischen fahrer- und beifahrerseitigem Windschott erreicht und so die in den Fahrgastraum zurückströmende Luft auf einen von den Insassen genügend entfernten Bereich konzentriert werden, so daß keine Zugluft in die Nähe Insassen gelangen kann.

Vorteilhafte Weiterbildungen und Ausgestaltungen der vorliegenden Erfindung ergeben sich aus den weiteren Ansprüchen, der Beschreibung und der Zeichnung.

In der folgenden Beschreibung werden bevorzugte Ausführungsbeispiele der Erfindung anhand der Zeichnung näher erläutert.

Es zeigt dabei:
- Fig. 1: eine dreidimensionale, stark abstrahierte Darstellung eines Cabriolets;
- Fig. 2: eine stark vereinfachte Draufsicht auf das Cabriolet von Fig. 1 mit einem Schnitt in etwa der Kopfhöhe eines Insassen, gemäß einer ersten Ausführungsform der vorliegenden Erfindung; und
- Fig. 3: eine der Fig. 2 entsprechende Draufsicht auf ein Cabriolet gemäß einer weiteren Ausführungsform der Erfindung.

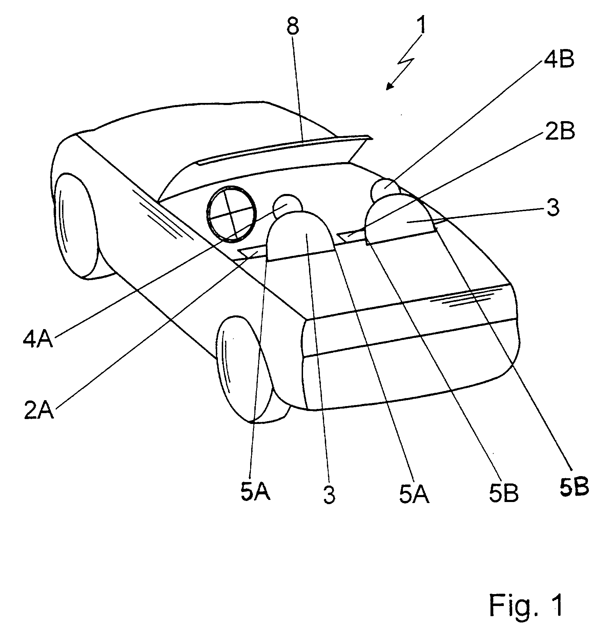

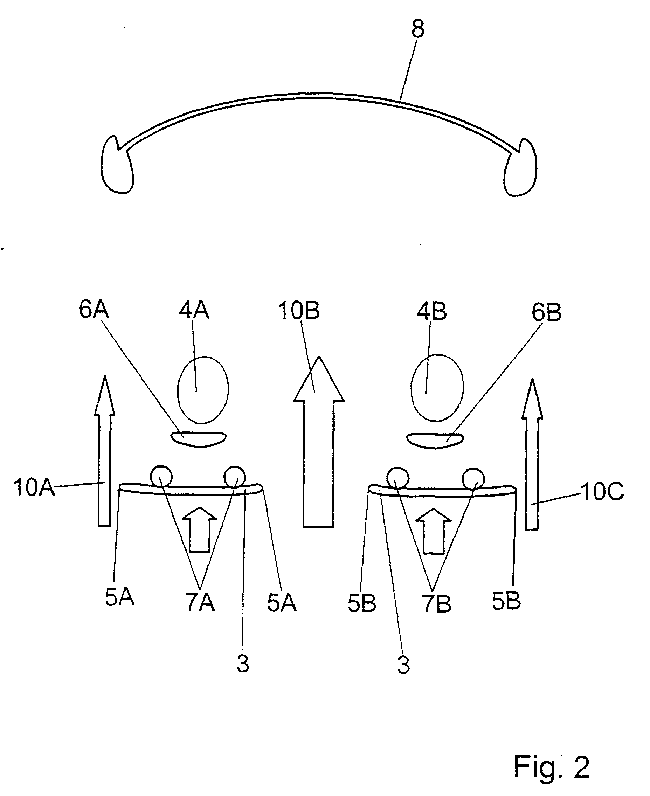

Die Fig. 1 und Fig. 2 zeigen ein Cabriolet 1, das hier beispielhaft mit nur zwei Fahrzeugsitzen ausgestattet ist. Bei diesem gezeigten Cabriolet 1 ist beiden Fahrzeugsitzen 2A, 2B ein Windschott 3 zugeordnet. Grundsätzlich dient hier das Windschott 3 dazu, einen Luftzug von hinten an den Kopfbereich sowie an Schulter und Nacken von Insassen 4A, 4B dadurch zu verhindern, daß der Kopf und der Oberkörper der Insassen 4A, 4B im sogenannten Totwasserbereich des Windschotts liegen.

Das Windschott 3 ist dabei derart ausgestaltet, daß es an die sich auf den Fahrzeugsitzen 2A, 2B befindenden Insassen 4A, 4B in Form und Lage angepaßt ist. Darüber hinaus ist das Windschott 3 auch derart ausgestaltet, daß auf dem das Windschott 3 begrenzenden Bereich 5A, 5B eine in den Fig. 1 und 2 nicht dargestellte aerodynamische Luftleitvorrichtung vorgesehen ist. Diese Luftleitvorrichtung kann sich auf dem gesamten das Windschott 3 begrenzenden Bereich 5A, 5B oder auch nur auf einem Teil davon befinden. Das Windschott 3 ist dabei derart angeordnet, daß es vom Fahrzeugboden aus in etwa lotrecht nach oben absteht, so daß die sich auf den Fahrzeugsitzen 2A, 2B befindenden Insassen 4A, 4B gegen störende Fahrtwindwirbel von hinten geschützt werden.

Eine aerodynamische Luftleitvorrichtung bedeutet im vorliegenden Fall eine Art aerodynamischer Hilfe, die insbesondere einer besseren und gezielteren Luftführung insbesondere der Rückströmung in insassenferne Bereiche der Kabine hinein zum Ausgleich eines Kabinenunterdrucks dient.

Wie schon ausgeführt wurde, wird durch die Verwendung eines Windschotts der Unterdruck in der Fahrzeugkabine erhöht. Dadurch wird die Strömungsscherschicht je nach Höhe des Druckunterschiedes etwas in Richtung nach unten in die Fahrzeugkabine hineingezogen. Um dies zu vermeiden, findet in der erfindungsgemäßen Lösung durch gezielte Luftführung der Rückströmung ein Druckausgleich in der Fahrzeugkabine statt. Mit der vorliegend beschriebenen, an die Insassen 4A, 4B angepaßten Form des Windschotts 3 wird nämlich bewirkt, daß insbesondere im Bereich der vorderen zwei Insassen in der Fahrzeugmitte Luft von hinten in die Fahrzeugkabine gelangt, wobei aufgrund dieses Luftmassentransports ein Druckausgleich in der Fahrzeugkabine gewährleistet wird.

Unter Fahrzeugmitte ist hierbei immer der Bereich zwischen zwei Insassen zu verstehen. Das Windschott 3, wie es hier beschrieben wird, kann außer vorderen auch hinteren Fahrzeuginsassen zugeordnet werden. Dabei kann im Fondbereich auch unter Umständen drei Sitzen jeweils ein Windschott zugeordnet werden, wobei dann unter Fahrzeugmitte jeweils der Bereich zwischen benachbarten Insassen zu verstehen ist.

Strömungstechnisch wirkt die Anordnung der aerodynamischen Luftleitung bzw. Hilfe als eine Art Düse, mit der die rückgeführte Luft so eingestellt werden kann, daß der Insasse 4A, 4B von der rückströmenden Luft nichts spürt.

Gemäß der gezeigten bevorzugten Ausführungsform der vorliegenden Erfindung ist das Windschott 3 zweiteilig ausgebildet. Ebenso ist auch eine einteilige Ausbildung des Windschotts mit horizontaler Verbindung im unteren Windschottbereich (nicht dargestellt) denkbar, d.h. daß jeweils jedem Fahrzeugsitz 2 eigens ein Windschott 3 zugeordnet wäre. Ein für jeden Fahrzeugsitz 2 gesondert ausgebildetes Windschott hat jedoch den Vorteil, daß jeder sich im Fahrzeug befindende Insasse gesondert entscheiden kann, wie er ein gegebenenfalls hochund herunterklappbares bzw. hoch- und herunterschiebbares Windschott bezüglich dessen Höhe einstellen möchte. Befindet sich beispielsweise kein Insasse auf dem Beifahrersitz, kann das beifahrerseitige Windschott heruntergeklappt bleiben und damit ein umso besserer Druckausgleich stattfinden.

Es ist des weiteren denkbar, ein einteiliges Windschott vorzusehen, dessen Luftdurchlässigkeit in verschiedenen Bereichen unterschiedlich ist und dadurch die Luft gezielt in die Fahrzeugkabine läßt. Denkbar wäre zum Beispiel bei einem einteiligen Windschott den Bereich hinter Kopf, Nacken und Schulter der Insassen luftundurchlässig zu gestalten, den Bereich zwischen den Fahrzeuginsassen jedoch luftdurchlässig. Auf diese Weise wird vermieden, daß Luft von hinten störende Zugerscheinungen im Bereich der Fahrzeuginsassen erzeugt. Gleichzeitig wird jedoch gezielt Luft in die Fahrzeugmitte eingelassen, um einen Druckausgleich durchzuführen. Die Übergänge zwischen den Bereichen unterschiedlicher Luftdurchlässigkeit können kontinuierlich gestaltet werden, d.h. daß die Luftdurchlässigkeit kontinuierlich immer größer bzw. kleiner wird.

Es soll hierbei nochmals betont werden, daß das Windschott 3 auch ebenso in vier- und mehrsitzigen Cabriolets eingesetzt werden kann, wobei dann das Windschott entsprechend an den jeweiligen Sitz bzw. an die Sitzbank mit entsprechenden Sitzpositionen angepaßt werden muß, um eine körperangepaßte Form des Windschotts zu erhalten.

Wie insbesondere der Fig. 2 zu entnehmen ist, die einen Schnitt des in Fig. 1 gezeigten Fahrzeuges 1 darstellt, ist hier das Windschott 3 jeweils an den jeweiligen Fahrzeugsitzen 2A, 2B zugeordneten Überrollbügeln 7A, 7B befestigt. Daneben wäre es jedoch ebenfalls denkbar, daß das Windschott am Fahrzeugsitz 2 oder an einer Nackenstütze 6A, 6B befestigt ist.

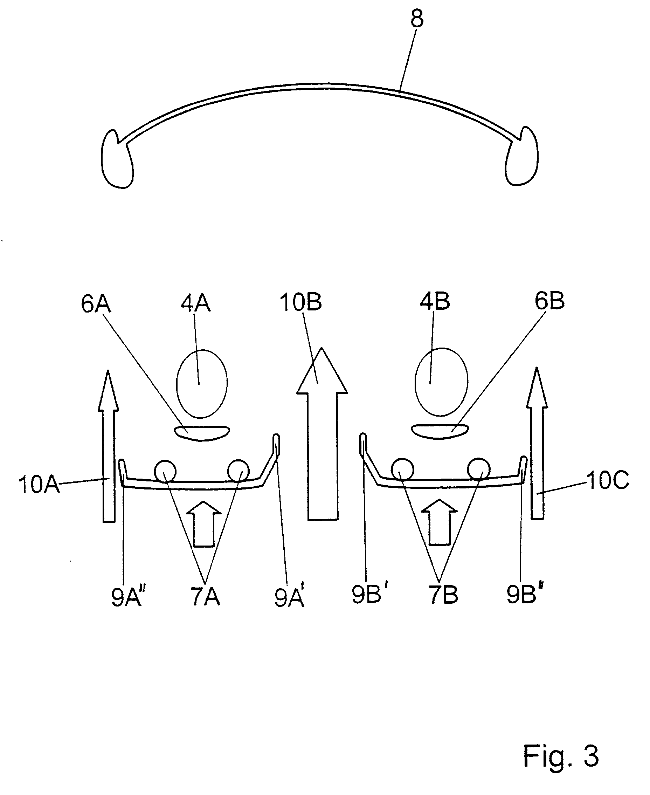

In der Fig. 3 ist eine weitere Ausführungsform der vorliegenden Erfindung gezeigt, wobei hierbei den Fig. 1 und 2 entsprechende Bauteile mit entsprechenden Bezugszeichen versehen sind.

Dabei ist erkennbar, daß das Windschott 3 auf der dem benachbarten Fahrzeugsitz 2A, 2B zugewandten Seite aerodynamische Luftleitvorrichtungen 9A', 9B' aufweist. Dadurch ist es möglich, daß die in den Fahrgastraum zurückströmende Luft, die durch die geraden Pfeile 10A, 10B, 10C dargestellt ist, jeweils sehr gezielt in die Fahrzeugkabine geführt werden kann. Dies bedeutet, daß die sich in ihrer Normalposition auf den Sitzen 2A, 2B befindenden Insassen 4A, 4B zumindest im Kopf-, Nacken- und Schulterbereich keiner Zugbelastung ausgesetzt sind, während durch den mittleren Bereich ein Druckausgleich erfolgen kann. Darüber hinaus weist das Windschott 3 jedoch gemäß dieser gezeigten bevorzugten Ausführungsform ebenso aerodynamische Luftleitvorrichtungen 9A'', 9B'' auf der dem benachbarten Fahrzeugsitz 2B, 2A abgewandten Seite auf, d.h. also auf der der Fahrzeugseitenwand zugewandten Seite.

Durch eine solche Ausgestaltung des Windschotts 3 ist es möglich, daß nicht nur in den mittigen Bereich des Fahrzeugs eine sehr gezielte Luftzuführung zum Druckausgleich in der Fahrzeugkabine realisiert werden kann, sondern auch in die äußeren seitlichen Bereiche entlang der Fahrzeugseitenverkleidung bzw. Seitenscheibe. Auf diese Weise kann ein Druckausgleich jeweils auf beiden Seiten des Insassen 4A, 4B in einer besonders gezielten Art und Weise erfolgen. Es ist auch denkbar, den Druckausgleich nur über die außen liegenden Leitvorrichtungen 9A'', 9B'' vorzunehmen.

Bezüglich der Materialwahl für das Windschott 3 ist anzumerken, daß dieses in jeglicher bekannter Manier ausgebildet sein kann. Vorliegend ist das erfindungsgemäße Windschott 3 mit einem elastischen Netz ausgebildet, das aber auch formstabil sein kann und beispielsweise ein Drahtgeflecht sein kann, das ein kostengünstiges Windschott ermöglicht, welches die Sicht insbesondere des Fahrers des Fahrzeuges nicht einschränkt.

Die in der Fig. 3 dargestellten aerodynamischen Leitelemente 9A', 9B' bzw. 9A'', 9B'' können verstell- oder drehbar angebracht sein, um je nach Fahrsituation bzw. Befinden der Insassen die Luftrückführung von hinten in die Kabine, insbesondere die Düsenwirkung zwischen den Leitelementen 9A' und 9B' zu verstärken oder zu reduzieren. Außerdem sollten die Leitelemente 9A', 9B' bzw. 9A'', 9B'' aus insassenschutztechnischen Gründen so gestaltet sein, daß eine Verletzungsgefahr möglichst gering ist. Das bedeutet, daß sie keine scharfen Kanten aufweisen und aus nachgiebigem Material bestehen sollten.

## Patentansprüche

1. Cabriolet, bei dem wenigstens einem Fahrzeugsitz ein Windschott zugeordnet ist,
**dadurch gekennzeichnet,**
**daß** das wenigstens eine Windschott (3) an sich auf den Fahrzeugsitzen (2A, 2B) befindende Insassen (4A, 4B) angepaßt ist, wobei zumindest in einem Teil des das Windschott (3) begrenzenden Bereichs (5A, 5B) eine aerodynamische Luftleitvorrichtung vorgesehen ist.

2. Cabriolet nach Anspruch 1,
**dadurch gekennzeichnet,**
**daß** die aerodynamische Luftleitvorrichtung an allen das Windschutt begrenzenden Bereichen (5A, 5B) des Windschotts (3) vorgesehen ist.

3. Cabriolet nach Anspruch 1,
**dadurch gekennzeichnet,**
**daß** die aerodynamische Luftleitvorrichtung (9A', 9B' und/oder 9A'', 9B'') zumindest auf einer dem benachbarten Sitz (2A, 2B) zugewandten und/oder auf einer dem benachbarten Sitz (2A, 2B) abgewandten Seite vorgesehen ist.

4. Cabriolet nach einem der Ansprüche 1 bis 3,
**dadurch gekennzeichnet,**
**daß** die aerodynamische Luftleitvorrichtung (9A', 9B' und/oder 9A'', 9B'') in Form eines sich seitlich des Fahrzeugsitzes (2A, 2B) in Fahrzeuglängsrichtung erstreckenden Teils des Windschotts (3) vorgesehen ist.

5. Cabriolet nach einem der Ansprüche 1 bis 4,
**dadurch gekennzeichnet,**
**daß** die aerodynamische Luftleitvorrichtung (9A', 9B' und/oder 9A'', 9B'') derart ausgebildet ist, daß sie düsenartig einen Luftstrom von einem heckseitigen Bereich des Windschotts (3) seitlich der Insassen (4A, 4B) in einen Fahrgastraum führt.

6. Cabriolet nach einem der Ansprüche 1 bis 5,
**dadurch gekennzeichnet,**
**daß** die aerodynamische Leitvorrichtung (9A', 9B' und/oder 9A'', 9B'') beweglich mit dem Windschott (3) verbunden ist.

7. Cabriolet nach einem der Ansprüche 1 bis 6,
**dadurch gekennzeichnet,**
**daß** das Windschott (3) am Fahrzeugsitz (2A, 2B), an einer Nackenstütze (6A, 6B) und/oder einem Überrollbügel (7A, 7B) befestigt ist.

8. Cabriolet nach einem der Ansprüche 1 bis 7,
**dadurch gekennzeichnet,**
**daß** das Windschott (3) für nebeneinander angeordnete Fahrzeugsitze (2A, 2B) einteilig ausgebildet ist.

9. Cabriolet nach einem der Ansprüche 1 bis 7,
**dadurch gekennzeichnet,**
**daß** das Windschott (3) für jeden Fahrzeugsitz (2A, 2B) gesondert ausgebildet ist.

10. Cabriolet nach Anspruch 8,
**dadurch gekennzeichnet,**
**daß** das Windschott (3) Bereiche mit unterschiedlicher Luftdurchlässigkeit aufweist.

11. Cabriolet nach Anspruch 8 oder 10,
**dadurch gekennzeichnet,**
**daß** das Windschott (3) im Bereich hinter Kopf, Nacken und Schulter der Insassen luftundurchlässig und im Bereich zwischen den Fahrzeuginsassen luftdurchlässig ist.
